Europäisches Patentamt

(19) European Patent Office

Office européen des brevets

(11) Veröffentlichungsnummer : **0 346 267 B1**

(12) **EUROPÄISCHE PATENTSCHRIFT**

(45) Veröffentlichungstag der Patentschrift :
29.05.91 Patentblatt 91/22

(51) Int. Cl.⁵ : **F16L 1/028,** E02D 9/02,
E03B 1/00, H02G 1/08

(21) Anmeldenummer : 89730068.7

(22) Anmeldetag : 14.03.89

(54) **Rohrziehgerät.**

(30) Priorität : 08.06.88 DE 3819820

(43) Veröffentlichungstag der Anmeldung :
13.12.89 Patentblatt 89/50

(45) Bekanntmachung des Hinweises auf die
Patenterteilung :
29.05.91 Patentblatt 91/22

(84) Benannte Vertragsstaaten :
AT BE CH DE ES FR GB GR IT LI LU NL SE

(56) Entgegenhaltungen :
DE-A- 2 336 302
DE-B- 1 634 622
DE-B- 2 040 449

(72) Erfinder : Haas, Dietmar
Hechelstrasse 24
W-1000 Berlin 51 (DE)
Erfinder : Gaebelein, Wilhelm, Dr.
Niklasstrasse 53
W-1000 Berlin 37 (DE)
Erfinder : König, Karl-Heinz
Walldürner Weg 36
W-1000 Berlin 20 (DE)
Erfinder : Beyer, Klaus, Dr.
Nassauische Strasse 64
W-1000 Berlin 31 (DE)

(74) Vertreter : Maikowski, Michael, Dipl.-Ing. Dr.
Patentanwälte Maikowski & Ninnemann
Xantener Strasse 10
W-1000 Berlin 15 (DE)

(73) Patentinhaber : BERLINER
WASSER-BETRIEBE EIGENBETRIEB VON
BERLIN
Hohenzollerndamm 45
W-1000 Berlin 31 (DE)

## Beschreibung

Die Erfindung betrifft ein Rohrziehgerät nach dem Oberbegriff des Patentanspruchs 1.

Ein derartiges Rohrziehgerät zum Herausziehen von Rohren, Kabeln und anderen rohrförmigen Gegenständen aus dem Boden wird in der DE-A-24 34 030 beschrieben. Dieses Rohrziehgerät wird insbesondere bei der Auswechslung von Anschlußleitungen in komunalen Versorgungs-Rohrnetzen eingesetzt. Bei diesem Rohrziehgerät weist der Rohrziehkopf drei symmetrisch um das abzuziehende Rohr angeordnete, mittels Arbeitskolben gegen eine Rückstellfeder an das Rohr anlegbare Klemmbacken auf. Die Antriebsverbindung zwischen Rohrziehgerät und abzuziehendes Rohr ist kraftschlüssig.

Beim Einsatz dieses Rohrziehgerätes zum Ausziehen von Rohren unterschiedlichen Durchmessers werden die Rohre von den Klemmbacken häufig nicht genau zentrisch erfaßt. Die kraftschlüssige Anlage der Klemmbacken durch die Arbeitszylinder erfolgt ungleichmäßig. Stark korrodierte Rohre werden wegen der geringen Anpreßfläche einseitig verdrückt. Dies hat zur Folge, daß die Arbeitszylinder des Rohrziehgerätes unterschiedlich belastet werden. Die dabei auftretenden unvermeidlichen Querkräfte führen zu Schäden an den Arbeitszylindern.

Die nicht genau zentrische Kraftschluß-Anlage der Klemmbacken bewirkt sehr oft ein Festklemmen an den Rohren. Ein normales Öffnen der Klemmbacken wird damit erheblich erschwert oder sogar verhindert. Ein gewaltsames Öffnen der Klemmbacken führt zu Beschädigungen. Außerdem verhindern Korrosionsbeläge auf den Rohren oft einen sicheren Kraftschluß, so daß der Rohrziehkopf am Rohr rutscht.

Der Erfindung liegt die Aufgabe zugrunde, zur Auswechslung von Anschlußleitungen in komunalen Versorgungsnetzen ein optimal störungsfrei arbeitendes Rohrziehgerät zur Verfügung zu stellen.

Erfindungsgemäß wird diese Aufgabe durch die Merkmale des Patentanspruchs 1 gelöst.

Mit Vorteil ist die Antriebsverbindung zwischen den Betriebselementen des Rohrabziehgerätes und dem abzuziehenden Rohr eine formschlüssige. Eine Übertragung von quer zur Rohrachse verlaufenden Reaktionskräften, die beim kraftschlüssigen Eingriff aus den vorstehend dargelegten Gründen zwangsläufig bei dem bekannten Rohrabziehgerät auftreten und zu Betriebsstörungen führen, wird mit Sicherheit ausgeschlossen. Ein Festklemmen des Rohrabziehgerätes am Rohr wird ausgeschlossen.

Die Kraftübertragung vom Rohrziehgerät auf das Rohr erfolgt über die Druckplatte durch Formschluß über eine optimal große Fläche, gleichmäßig parallel zur Rohrachse. Das abzuziehende Rohr wird durch die Zentrieröffnung in der Druckplatte genau zentriert.

Der als Formschluß-Widerlager dienende Klemmblock kann völlig unabhängig, ohne Rückwirkung auf das Rohrabziehgerät am Rohr in lösbarer Weise festgelegt sein. Das Umsetzen nach einem Hub kann schnell mit einfachen Handgriffen erfolgen. Der erforderliche Zeitaufwand ist gegenüber den Standzeiten, die Betriebsausfälle und Reparaturen des bekannten Rohrabziehgerätes erforderlich machen, eine vernachlässigbare Größe.

Durch auswechselbare Zentrierringe wird eine exakte Zentrierung bei jedem Rohrdurchmesser ermöglicht.

Die Teleskopzylinder ermöglichen eine Zeiteinsparung beim Ziehen, da die Anzahl der Hubtakte verringert wird.

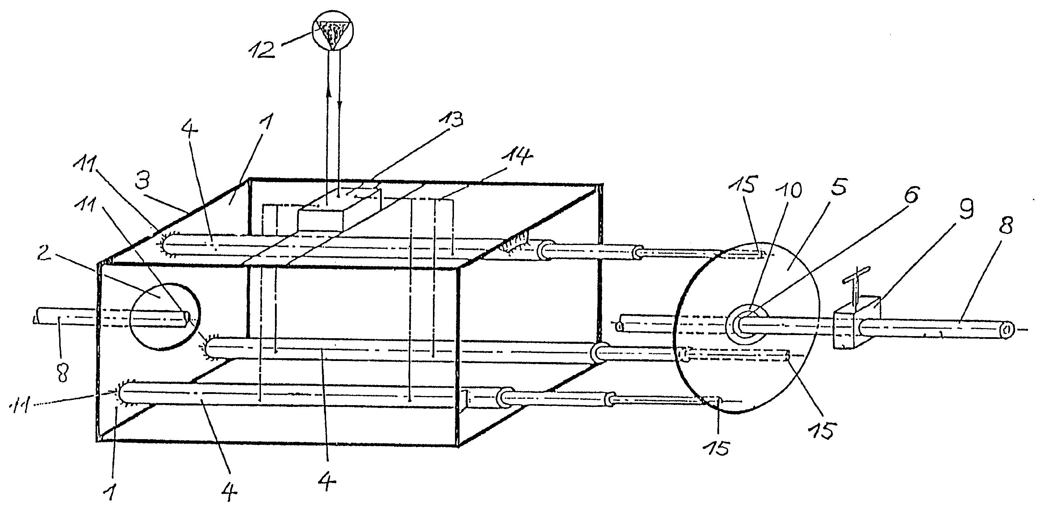

Ein Ausführungsbeispiel der Erfindung wird unter Bezugnahme auf die Zeichnung, in der schematisch die Betriebselemente einer Rohrabziehvorrichtung dargestellt sind, erläutert.

Das Rohrabziehgerät weist eine Widerlagerplatte 1 mit einer Rohrdurchtrittsöffnung 2 auf. An dieser Widerlagerplatte 1 ist ein Geräterahmen 3 montiert, der die Betriebselemente aufnimmt. Zum Auswechseln von Anschlußleitungen wird in bekannter Weise das Rohrabziehgerät in einem Keller oder einem Kopfloch mit der Widerlagerplatte 1 gegen die Wand angesetzt, aus der die Anschlußleitung austritt. Das Rohr wird nach dem Abtrennen von der Hauptleitung schrittweise aus dem Boden herausgezogen. Gleichzeitig wird ein angehängtes Austauschrohr aus Kunststoff nachgezogen.

An der Widerlagerplatte 1 sind drei als Teleskopzylinder ausgebildete Arbeitszylinder 4 befestigt. Die Fußpunkte 11 dieser Arbeitszylinder 4 sind, wie dargestellt, im gleichen Winkelabstand voneinander um die Rohrdurchtrittsöffnung 2 angeordnet. Die Arbeitszylinder 4 verlaufen parallel zueinander und erstrecken sich senkrecht zur Widerlagerplatte 1. Der Antrieb der Arbeitszylinder 4 erfolgt mittels einer Hydraulikpumpe 12 über einen Steuerblock 13 und Hydraulikleitungen 14.

An den ein- und ausfahrbaren Enden 15 der Arbeitszylinder 4 ist eine Druckplatte 5 montiert, die eine konzentrisch mit der Rohrdurchtrittsöffnung 2 in der Widerlagerplatte 1 fluchtende Zentrieröffnung 6 aufweist. Zur exakten Zentrierung von Rohren 8 unterschiedlichen Durchmessers sind auswechselbare, in die Zentrieröffnung 6 einsetzbare Zentrierringe 10 vorgesehen.

Als Widerlager für die formschlüssige übertragung der Antriebskräfte von der Druckplatte 5 auf das sich durch die Zentrieröffnung 6 erstreckende, abzuziehende Rohr 8 ist ein Klemmblock 9 vorgesehen. Dieser Klemmblock 9 ist in lösbarer Weise am Rohr 8 festlegbar, so daß dieser nach jedem Hub wieder in die Ausgangsstellung zurückgebracht werden kann.

## Ansprüche

1. Rohrziehgerät mit

1. einer Widerlagerplatte (1) mit Rohrdurchtrittsöffnung (2), an der

2. sich wenigstens drei Arbeitszylinder (4) abstützen,

2.1 deren Fußpunkte (11) im gleichen Winkelabstand voneinander um die Rohrdurchtrittsöffnung (2) angeordnet sind, die

2.2 sich parallel zueinander und senkrecht zur Widerlagerplatte (1) erstrecken und

3. deren ein- und ausfahrbaren Enden einen Rohrziehkopf (5) tragen, dadurch gekennzeichnet, daß

3.1 an den Arbeitszylindern (4) als Rohrziehkopf eine Druckplatte (5) mit

3.2 einer, mit der Rohrdurchtrittsöffnung (2) in der Widerlagerplatte (1) koaxial fluchtenden Zentrieröffnung (6) befestigt ist,

4. deren Widerlager am abzuziehenden Rohr (8) als ein an diesem in lösbarer Weise festlegbarer Klemmblock (9) ausgebildet ist.

2. Rohrziehgerät nach Anspruch 1, dadurch gekennzeichnet, daß

2.3 die Arbeitszylinder (4) als Tandemzylinder ausgebildet sind.

3. Rohrziehgerät nach einem der Ansprüche 1 oder 2, gekennzeichnet, durch

3.2.1 in die Zentrieröffnung (6) einsetzbare Zentrierringe (10).

## Claims

1. Tube drawing apparatus with

1. an abutment plate (1) with tube access opening (2), on which plate

2. at least three working cylinders (4) are supported

2.1 the bases (11) of which are arranged with equal angular spacing from one another around the tube access opening (2), and

2.2 which extend parallel to one another and at right angles to the abutment plate (1)

3. the reciprocable ends of which carry a tube drawing head (5), characterised in that

3.1 a pressure plate (5) forming the tube drawing head is fixed on the working cylinders (4), the pressure plate having

3.2 a centring opening (6) coaxially aligned with the tube axis opening (2) in the abutment plate (1),

4. the abutment of which on the tube (8) to be drawn is constructed as a clamping block (9) mountable on the tube in a releasable manner.

2. Tube drawing apparatus according to Claim 1, characterised in that

2.3 the working cylinders (4) are constructed as tandem cylinders.

3. Tube drawing apparatus according to one of the Claims 1 or 2, characterised by

3.2.1 centring rings (10) insertable in the centring opening (6).

## Revendications

1. Appareil d'extraction de tube comprenant

1. une plaque de butée (1) dotée d'une ouverture de passage du tube (2), sur laquelle plaque

2. s'appuient au moins trois cylindres de service (4)

2.1 dont les points de piètement (11) sont agencés autour de l'ouverture de passage du tube (2) à la même distance angulaire les uns des autres,

2.2 ces cylindres s'étendant parallèlement l'un à l'autre et perpendiculairement à la plaque de butée (1) et

3. portant à leurs extrémités entrantes/sortantes une tête d'extraction de tube (5), caractérisé en ce que

3.1 il est fixé aux cylindres de service (4) à titre de tête d'extraction de tube une plaque d'appui (5)

3.2 dotée d'une ouverture de centrage (6) qui est alignée coaxialement avec l'ouverture de passage du tube (2) ménagée dans la plaque de butée (1),

4. l'appui de cette ouverture de centrage sur le tube à extraire (8) étant réalisé par un bloc de serrage (9) qui peut se bloquer sur le tube et s'en écarter.

2. Appareil d'extraction de tube selon la revendication 1, caractérisé en ce que

2.3 les cylindres de service (4) sont conformés en cylindres jumelés.

3. Appareil d'extraction de tube selon une des revendications 1 et 2, caractérisé en ce que

3.2.1 il comporte des bagues de centrage (10) qui peuvent être insérées dans l'ouverture de centrage (6).

4